# FASCICULE DE BREVET EUROPEEN

(11) **EP 1 968 741 B1**
(45) Date de publication et mention de la délivrance du brevet: **19.11.2014**
(21) Numéro de dépôt: 06847112.7
(22) Date de dépôt: 21.12.2006
(51) Int. Cl.: B01J 37/02, B01J 23/31, B01J 23/40, B01J 23/648, B01J 23/89, B01J 35/00, B01D 53/94

(54) **CATALYSEUR POUR LIGNE D'ECHAPPEMENT DE MOTEUR, DISPOSITIF DE REDUCTION DES EMISSIONS POLLUANTES INCLUANT CE CATALYSEUR ET UTILISATIONS DE CE DISPOSITIF**
KATALYSATOR FÜR EINE MOTORENABGASLEITUNG, VORRICHTUNG ZUR MINDERUNG SCHÄDLICHER EMISSIONEN MIT DIESEM KATALYSATOR UND VERWENDUNG DIESER VORRICHTUNG
CATALYST FOR AN ENGINE EXHAUST LINE, DEVICE FOR REDUCING POLLUTING EMISSIONS INCLUDING THIS CATALYST, AND USES OF THIS DEVICE

(30) Priorité: 23.12.2005 FR 0513271
(43) Date de publication de la demande: 17.09.2008
(73) Titulaire: Peugeot Citroën Automobiles SA, 78140 Vélizy-Villacoublay (FR); CENTRE NATIONAL DE LA RECHERCHE SCIENTIFIQUE (CNRS), 75016 Paris (FR)
(72) Inventeur: DUPRE, Sandrine, F-91400 Orsay (FR); SASSI, Alain, F-78180 Montigny Le Bretonneux (FR); KAROUM, Réda, F-54000 Nancy (FR); VERNOUX, Philippe, F-69270 Fontaines Saint Martin (FR); PIROVANO, Caroline, F-59510 Forest Sur Marque (FR); VANNIER, Rose-Noëlle, F-59810 Lesquin (FR); BILLARD, Alain, F-54000 Nancy (FR)
(74) Mandataire: Ménès, Catherine
(86) Numéro de dépôt international: PCT/FR2006/002837
(87) Numéro de publication internationale: WO 2007/071848

(56) Documents cités:
- EP-A- 1 607 132
- WO-A-99/64136
- FR-A- 2 728 484
- US-A- 4 253 925
- US-A- 5 022 975
- HWANG H J ET AL: "Fabrication of novel type solid electrolyte membrane reactors for exhaust gas purification" JOURNAL OF THE EUROPEAN CERAMIC SOCIETY, ELSEVIER SCIENCE PUBLISHERS, BARKING, ESSEX, GB, vol. 24, no. 6, 2004, pages 1325-1328, XP004485373 ISSN: 0955-2219
- GUILLODO M ET AL: "Redox stability of BIMEVOX.10 materials (ME=Co, Cu)" ELECTROCHIMICA ACTA, ELSEVIER SCIENCE PUBLISHERS, BARKING, GB, vol. 47, no. 17, 5 juillet 2002 (2002-07-05), pages 2809-2815, XP004366604 ISSN: 0013-4686
- LOFBERG A ET AL: "Oxygen permeation versus catalytic properties of bismuth-based oxide ion conductors used for propene oxidation in a catalytic dense membrane reactor" CATALYSIS TODAY, ELSEVIER, vol. 91-92, 2004, pages 79-83, XP002398912 ISSN: 0920-5861

## Description

L'invention concerne la réduction des émissions polluantes d'oxydes d'azote (NO, NO₂ et/ou d'hydrocarbures provenant des lignes d'échappement des moteurs, notamment ceux fonctionnant avec un large excès d'oxygène par rapport au carburant (moteurs Diesel et moteurs à essence « pauvres »).

En vue de répondre aux futures normes de dépollution européennes, il est nécessaire de réduire le rejet par les véhicules des polluants réglementés tels que les oxydes d'azote (NOₓ), les particules (PM), le monoxyde de carbone (CO) et les hydrocarbures (HC). Mais il faut également être vigilant à l'égard des espèces non encore réglementées comme le dioxyde de carbone (CO₂) et le méthane (CH₄) responsables de l'effet de serre.

Concernant les motorisations Diesel, les principaux problèmes non encore résolus de façon satisfaisante sont les traitements des particules et des oxydes d'azote.

En effet, actuellement les véhicules Diesel proposés en série sont équipés de systèmes de post traitement du CO et des HC ainsi que de systèmes de filtration de particules (FAP), mais ne disposent pas de dispositif de post traitement pour les NOx, celui-ci s'opérant généralement par la calibration des paramètres moteurs. Cependant, lorsque, comme il est prévisible, les futures réglementations imposeront une nouvelle baisse du niveau de rejet de NOx toléré, cela risque de ne plus être suffisant. C'est pourquoi des solutions alternatives sont en cours d'évaluation. Parmi elles, deux technologies principales sont envisagées :
- le piège à NOx : après une phase de fonctionnement en mélange pauvre durant laquelle les NOx sont stockés sur un pain catalytique, une phase de fonctionnement riche est nécessaire pour l'extraction des NOx et leur réduction selon les réactions :

| | | |
|---|---|---|
| Phase de stockage : | | NO + ½ O₂ → NO₂ |
| | | NOₓ + BaO→ Ba(NO₃)₂ |
| Phase de déstockage | 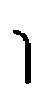 | Ba(NO₃)₂ → NOx + BaO |
| et de réduction : | 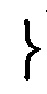 | NOx + réducteurs (HC, CO, H₂) →N₂ + (H₂O, |
| | 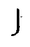 | CO₂,...) |

- la réduction catalytique sélective (SCR) par l'urée : l'objectif est de réduire NO en injectant de l'urée (NH₂-CO-NH₂) qui, convertie en ammoniac dans la ligne d'échappement, va réduire les NOx sur un catalyseur adapté :

NO + NH₃ + ¼ O₂ → N₂ + 3/2 H₂O

Ces technologies présentent des inconvénients majeurs tels qu'une surconsommation en carburant, les gros volumes de catalyseur nécessaires, la présence de systèmes additionnels d'injection (dans le cas de la SCR), la trop faible durée de vie des catalyseurs, et des coûts associés élevés.

Une autre voie envisagée pour le traitement des NOx est d'éviter leur formation à la source. C'est l'idée des concepts dits LTC (Low Température Combustion), qui reposent sur une homogénéisation de la charge et l'utilisation de forts taux de recirculation des gaz d'échappement permettant de ralentir la combustion et d'abaisser les températures de combustion (la vitesse de formation de NO croît exponéntiellement avec la température de combustion). La contrepartie est une augmentation significative des niveaux de HC et de CO émis, associée à des températures des gaz d'échappement relativement basses (limite basse 150°C) auxquelles les systèmes de post traitement risquent d'être inefficaces.

Concernant les motorisations essence, le post traitement des polluants CO, NOx et HC est fait par combinaison de stratégies moteur et de l'utilisation de catalyseurs trois voies introduits vers 1975. Le terme « 3 voies » signifie que CO, HC et NOx sont traités simultanément par des réactions d'oxydoréduction, les deux premiers étant oxydés et le troisième réduit, selon les réactions :
- oxydation

   CO + ½O2 → CO₂

   CₓH_{y} + (x+y/4) O₂ → x CO₂ + y/2 H₂O
- réduction

   NO + H₂ →1/2 N₂ + H₂O

   NO + CO → ½ N₂ + CO₂

   (2x+y/2)NO + CₓH_{y} → (x+y/4) N₂ + x CO₂

Afin que les cinq réactions se réalisent simultanément de manière significative, il est impératif que l'air et le carburant soient présents en quantités stoechiométriques. C'est pourquoi il est nécessaire d'implanter sur les véhicules équipés d'un pot catalytique une sonde lambda qui va réguler la richesse.

Par ailleurs, pour que le catalyseur soit actif, la température requise est de l'ordre de 250°C, ce qui rend le post traitement inefficace au démarrage.

Cette technologie éprouvée pourrait ne plus être suffisante ces prochaines années en raison de l'augmentation des exigences des normes de dépollution. Ces exigences croissantes, ainsi que l'augmentation du coût des matières premières, vont induire des coûts associés au post traitement qui seront critiques dans un marché très concurrentiel.

Le document US 5 022 975 A décrit des catalyseurs comprenant un électrolyte solide entre deux électrodes à base de métaux précieux et un électrolyte solide.

Le but de l'invention est de proposer un procédé et des dispositifs de réduction des émissions polluantes des moteurs essence et diesel plus efficaces et moins coûteux que les solutions connues.

A cet effet, l'invention a pour objet un catalyseur pour ligne d'échappement de moteur à combustion interne, caractérisé en ce qu'il est constitué par l'empilement dans cet ordre :
- d'une phase active à base de métaux précieux formant électrode déposée par dépôt physique en phase vapeur PVD;
- d'un électrolyte présentant une conductivité ionique par les ions O²⁻ supérieure ou égale à 0,01 mS/cm à 200°C,
- d'une contre-électrode.

et en ce que les propriétés catalytiques de ladite phase active sont activables à 100°C sous l'effet d'une puissance électrique de 0,1µW/cm² de phase active.

Il peut comporter une barrière de diffusion entre la phase active et l'électrolyte.

La contre-électrode peut être constituée par un support métallique intégré à un boîtier renfermant le catalyseur.

L'électrolyte peut être constitué de BIMEVOX.

Le métal du BIMEVOX peut être choisi parmi le tantale, le titane, le cobalt, le cuivre, le nickel, le zinc, un métal alcalin, un métal alcalino-terreux, une terre rare, un métal de transition, un élément des groupes IIIₐ, IVₐ et Vₐ de la classification périodique, et un mélange de ces métaux.

L'électrolyte peut être une cérine dopée par un ou des oxydes de terres rares telles que le gadolinium ou le samarium.

La barrière de diffusion peut être en dioxyde de titane ou en zircone yttriée, avoir une épaisseur de 100nm ou moins et avoir été déposée sur l'électrode par dépôt physique en phase vapeur.

La phase active formant électrode peut être un revêtement de platine et/ou de palladium et/ou de rhodium, déposé par dépôt physique en phase vapeur.

La phase active à base de métaux précieux peut incorporer une dispersion d'une phase inerte capable de limiter le frittage de la phase active.

La phase active à base de métaux précieux peut incorporer une dispersion des métaux précieux sur une phase conductrice électronique.

Ladite phase conductrice électronique peut être un oxyde de structure pérovskite tel que La₍₁₋ₓ₎ Srₓ MnO₃.

Ladite phase conductrice électronique peut être un alliage d'une céramique avec l'électrolyte.

La contre-électrode peut être une couche mince de métal ou d'oxyde conducteur électronique déposée sur l'électrolyte par dépôt physique en phase vapeur.

L'invention a également pour objet un dispositif de réduction des émissions polluantes d'un moteur à combustion interne, caractérisé en ce qu'il comporte :
- un catalyseur du type précédent ;
- un générateur de courant connecté à la phase active et à la contre-électrode, inclus dans une ligne d'alimentation du catalyseur en électricité ;
- un dispositif électronique de contrôle moteur réglant et recueillant les paramètres de fonctionnement du moteur et commandant la ligne d'alimentation du catalyseur en électricité de manière à pouvoir imposer une tension ou un courant déterminé entre la phase active et la contre-électrode ;
- un boîtier renfermant le catalyseur, placé sur la ligne d'échappement du moteur.

L'invention a également pour objet une utilisation d'un dispositif précédent pour la conversion des hydrocarbures, du CO et des NOₓ émis par un moteur à combustion interne, caractérisée en ce que :
- lors des périodes de fonctionnement normal du catalyseur, on applique une tension ou un courant déterminé entre la phase active formant électrode et la contre-électrode ;
- lorsqu'on désire effectuer un diagnostic de l'état du catalyseur, on arrête l'application de la tension ou du courant, on mesure la tension à l'abandon entre l'électrode active et la contre-électrode, on compare cette tension à des cartographies de corrélation de cette tension au vieillissement du catalyseur intégrées au dispositif de contrôle moteur, on en déduit l'état de vieillissement du catalyseur, le cas échéant on procède à une modification des paramètres de fonctionnement du moteur, et on réapplique une tension ou un courant déterminé entre la phase active et la contre-électrode.

L'invention a également pour objet une utilisation d'un dispositif précédent pour le piégeage des NOx, caractérisée en ce que :
- lors des périodes de fonctionnement normal du catalyseur, on applique une tension ou un courant déterminé entre la phase active formant électrode et la contre-électrode ;
- lorsqu'on désire effectuer un diagnostic de l'état du catalyseur, on lance une opération de purge du catalyseur pour en éliminer les NOx qu'il renferme, on arrête l'application de la tension ou du courant, on mesure la tension résultant du courant d'ions dans l'électrolyte, on compare cette tension à des cartographies de corrélation de cette tension au vieillissement du catalyseur intégrées au dispositif de contrôle moteur, on en déduit l'état de vieillissement du catalyseur, et le cas échéant on lance l'exécution d'une désulfatation du catalyseur suivie d'une nouvelle mesure de la tension à l'abandon entre l'électrode active et la contre-électrode et d'une comparaison de cette tension aux cartographies de corrélation au vieillissement du catalyseur, puis on rétablit l'application d'une tension ou d'un courant déterminé entre la phase active formant électrode et la contre-électrode, en procédant à une modification des paramètres de fonctionnement du moteur si on a constaté que la désulfatation n'a pas permis de restaurer un fonctionnement du catalyseur identique à ce qu'il était lors de la précédente mesure du vieillissement.

Comme on l'a compris, l'une des caractéristiques de l'invention est de reposer sur le principe de promotion électrochimique de la catalyse. Le résultat est que l'invention permet :
- d'améliorer la capacité de conversion des catalyseurs ;
- d'étendre la plage de fonctionnement des catalyseurs vers les basses températures ;
- de diminuer la charge des métaux précieux, donc les coûts de ces systèmes ;
- de diagnostiquer l'état et l'activité du catalyseur en fonctionnement pour une optimisation de son efficacité et de sa durabilité (développement de diagnostics embarqués fiables).

La promotion électrochimique de la catalyse est connue en elle-même depuis la fin des années 1980. On a alors montré que l'activité catalytique, ainsi que la sélectivité d'un catalyseur pouvaient être considérablement modifiées lorsqu'un faible potentiel ou courant était appliqué à un catalyseur conducteur électronique déposé sur un support conducteur ionique. Ceci a pour effet de modifier considérablement l'activité catalytique mais aussi la sélectivité du catalyseur de manière réversible. Il s'agit de l' « effet NEMCA (Non Faradaic Electrochemical Modification of Catalytic Activity) » ou « promotion électrochimique de la catalyse ». Les effets les plus spectaculaires ont été obtenus dans le cas de la combustion totale des hydrocarbures, entre 350 et 500°C, avec des systèmes à base de métaux déposés en film mince sur des électrolytes solides conducteurs par les ions O²⁻. Les électrolytes solides communément utilisés sont à base de zircone yttriée (YSZ), mais la faible conductivité de la zircone stabilisée ne permet pas d'envisager des températures de fonctionnement inférieures à 350°C.
- On a déjà pensé à appliquer ce principe à la dépollution des émissions des moteurs d'automobile.

La plupart des travaux ont porté sur la catalyse 3 voies c'est-à-dire dans des conditions proches de la stoechiométrie voire en dessous. C'est dans ces conditions que les effets les plus marquants de la polarisation ont été obtenus aussi bien en réduction de NO par CO, C₂H₄ ou C₃H₆ qu'en combustion des hydrocarbures et du monoxyde de carbone.

Dans le cas de la réduction de NO, les systèmes sont pratiquement tous à base de Pt ou Rh déposé sur YSZ (conducteur O²⁻) ou alumine-béta (conducteur Na⁺). La gamme de température des études se situe entre 300°C et 450°C (idéale pour le fonctionnement de YSZ). On peut également citer une étude sur un électrolyte polymère à 135°C et une autre dans laquelle est utilisé le NASICON (Na-super ionic conductor) où des effets sont obtenus vers 280°C. Les électrolytes solides conducteurs Na⁺ présentent des résultats intéressants mais ont le gros défaut de ne pas pouvoir se recharger en Na⁺ dans le temps (car il n'y a pas de sodium dans l'air) et donc d'avoir une durée de vie trop courte.

Dernièrement, une étude a donné lieu à un réacteur électrochimique composé de plaques de YSZ avec deux électrodes actives en catalyse, le Pt d'un côté et le Rh de l'autre. De bons résultats sont enregistrés dans des conditions proches de la stoechiométrie, mais pour des températures supérieures à 300°C.

En ce qui concerne la combustion des hydrocarbures ou du monoxyde de carbone, les effets de la promotion électrochimique sont également plus importants pour des mélanges proches de la stoechiométrie. La combustion du méthane, de l'éthylène, de l'éthane, du propane, du propène et du CO a été étudiée sur un catalyseur électrochimique composé d'un métal tel que le Pt déposé sur YSZ. La polarisation de l'interface catalyseur/électrolyte modifie les forces de liaison entre le catalyseur et l'espèce adsorbée. Dans le cas d'un mélange contenant de l'oxygène et un hydrocarbure (ou du CO), les deux réactifs s'adsorbent sur les mêmes sites (une particule de métal) et sont donc en compétition d'adsorption. Pour que la réaction ait lieu rapidement, il faut que les deux réactifs soient adsorbés en proportions similaires à la surface du métal. Par conséquent, la modification des forces de liaison induite par la polarisation a pour objet d'orienter la compétition d'adsorption entre l'oxygène et l'hydrocarbure (ou le CO) afin que les deux réactifs puissent s'adsorber de manière à peu près équivalente. Lorsque l'un des deux réactifs présente une concentration beaucoup plus importante que l'autre (exemple : l'oxygène dans les mélanges pauvres), l'objectif de la polarisation est de freiner son adsorption pour que le réactif minoritaire puisse lui aussi s'adsorber.

L'invention a pour particularité d'utiliser un système catalytique à base de films minces de catalyseur (Pt, Pd, Rh, Pt-Pd, Pt-Pd-TiO₂, toute autre combinaison de métaux précieux) déposés sur des membranes de conducteur ionique. Un tel dispositif permet d'ajuster et de contrôler in-situ les propriétés catalytiques du catalyseur par voie électrochimique, en appliquant un courant ou un potentiel positif ou négatif. Ainsi, l'activité catalytique peut fonctionner entre 100 et 350°C, donc à basse température, et peut être adaptée en fonction de la température et de la composition des gaz (teneur en polluants, rapport hydrocarbure/oxygène) pour la réduction de NO et/ou la combustion des hydrocarbures et de CO même en présence d'un large excès d'oxygène. Pour obtenir un système efficace, il est nécessaire d'utiliser un conducteur ionique plus performant que les électrolytes actuels dérivés des piles à combustibles. Ce conducteur ionique doit avoir une conductivité ionique par les ions O²⁻ supérieure ou égale à 0,01 mS/cm à 200°C. C'est pourquoi l'invention propose notamment d'utiliser un électrolyte de la famille des BIMEVOX (Bismuth-Métal-Vanadium-Oxygène), dont la conductivité des ions O²⁻ est, à 200°C, cent fois supérieure à celle de la zircone stabilisée à l'oxyde d'yttrium (YSZ). Une autre famille de composés conducteurs des ions O²⁻ pouvant être utilisée dans le cadre de l'invention est les cérines dopées : leur conductivité ionique à 200°C est au moins dix fois supérieure à celle de la zircone stabilisée à l'oxyde d'yttrium.

Le dispositif mis en oeuvre est constitué d'un électrolyte solide possédant une telle conductivité ionique dans la gamme de température envisagée et de deux électrodes : une électrode de travail qui est également la phase active et une contre-électrode. Une barrière de diffusion entre la phase active et la membrane conductrice ionique peut, si nécessaire, également être introduite.

L'invention sera mieux comprise à la lecture de la description qui suit, donnée en référence aux figures annexées suivantes :
- la figure 1 qui représente schématiquement l'empilement des couches de matériaux constituant le catalyseur électrochimique selon l'invention ;
- la figure 2 qui représente schématiquement l'implantation du catalyseur électrochimique sur la ligne d'échappement ;
- la figure 3 qui montre l'organigramme d'une stratégie d'utilisation du catalyseur selon l'invention, orientée vers la conversion HC/CO ;
- la figure 4 qui montre l'organigramme d'une stratégie d'utilisation du catalyseur selon l'invention, orientée vers le stockage des NOx.

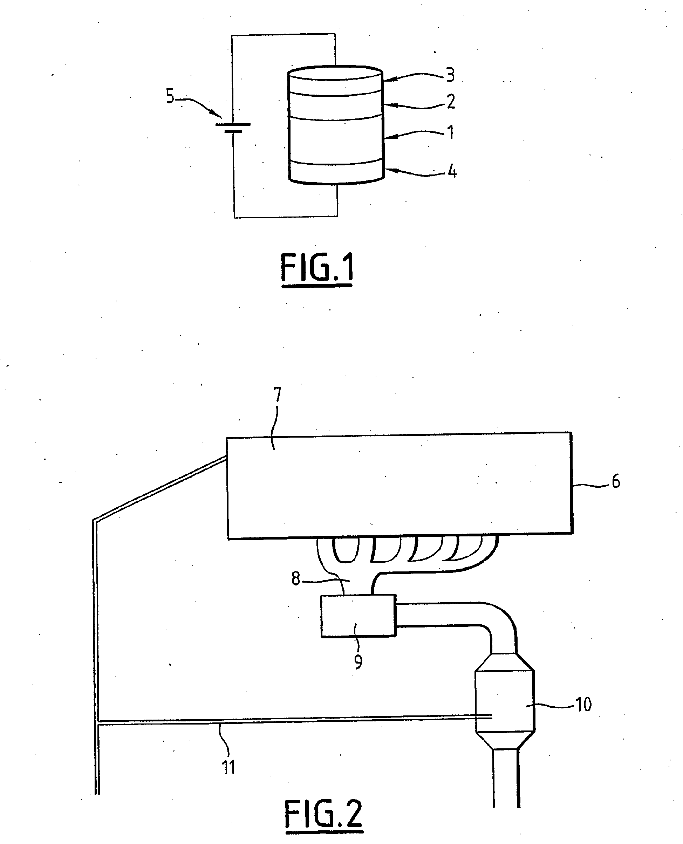

Le schéma du catalyseur électrochimique selon l'invention est donné sur la figure 1. Il est constitué par l'empilement des trois ou quatre éléments principaux précités :
- un électrolyte 1 qui peut être notamment un BIMEVOX ou une cérine dopée, et a en tout cas une conductivité ionique par les ions O²⁻ supérieure ou égale à 0,01 mS/cm à 200°C ;
- une barrière de diffusion (optionnelle) 2
- une phase active à base de métaux précieux 3 constituant une électrode active ; cette phase active peut être le catalyseur lui-même, seul ou dispersé sur un conducteur électronique tel qu'une pérovskite ;
- une contre-électrode 4.

Le courant ou potentiel, positif ou négatif, est appliqué entre l'électrode active 3 et la contre-électrode 4 à l'aide d'un générateur de courant 5. L'électrode active 3 et la contre-électrode 4 prennent l'électrolyte 1 et la barrière de diffusion 2 éventuelle en sandwich. La barrière de diffusion 2 est placée entre l'électrode active 3 et l'électrolyte 1. La contre-électrode 4 peut être constituée par un support métallique intégré au boîtier renfermant le catalyseur.

La figure 2 schématise l'implantation du catalyseur électrochimique selon l'invention sur une ligne d'échappement. Elle montre le moteur 6 et le dispositif électronique de contrôle moteur 7 qui règle et recueille ses paramètres de fonctionnement, le collecteur d'échappement 8, le turbocompresseur 9, le boîtier 10 renfermant le catalyseur électrochimique selon l'invention, et la ligne d'alimentation 11 du catalyseur en électricité, reliée au dispositif de contrôle moteur 7 qui commande son fonctionnement et recueille les informations qu'il fournit lors des phases de diagnostic.

On va à présent décrire les caractéristiques des différents composants du catalyseur électrochimique.

### - L'électrolyte solide 1

Afin que le dispositif soit opérationnel à basse température, le choix s'est principalement porté sur les familles des BIMEVOX (Bismuth-Métal-Vanadium-Oxygène) et des cérines dopées.

Les BIMEVOX dérivent du composé parent Bi₄V₂O₁₁ et sont obtenus par substitution partielle du bismuth et/ou du vanadium par un ou plusieurs métaux. Les BIMEVOX présentent à 200°C une conductivité de l'ordre de 0,1 mS/cm, donc environ 100 fois supérieure à celle de la zircone stabilisée à l'yttrium et permettent de travailler dès 100°C. Le métal peut, par exemple, être du tantale, du titane, du cuivre, du cobalt, du nickel, du zinc ou tout autre métal de transition, alcalin, alcalino-terreux, terre rare, élément des groupes IIIₐ, IVₐ ou Vₐ de la classification périodique ou une combinaison de ces éléments.

Les matériaux à base de cérine peuvent être dopés avec des oxydes de gadolinium, de samarium ou tous autres oxydes de terres rares. Les cérines dopées présentent une conductivité ionique à 200°C de l'ordre de 0,01 mS/cm, donc environ au moins dix fois supérieure à celle de la zircone stabilisée à l'yttrium.

De manière générale, cet électrolyte solide 1 doit être suffisamment conducteur pour permettre au catalyseur d'être activé sous l'effet d'une faible puissance électrique (0,1 µW/cm² de phase active 3) dès les basses températures (100°C).

### - La barrière de diffusion 2

La forte réductibilité des oxydes de bismuth, en présence d'une atmosphère riche en propène, peut nécessiter une couche protectrice agissant comme barrière de diffusion 2 pour éviter le contact de l'électrolyte solide 1 avec l'atmosphère réductrice. Cette couche protectrice 2 est constituée d'un film mince déposé par PVD (dépôt physique en phase vapeur) directement sur l'électrolyte 1. La barrière de diffusion 2 doit répondre à plusieurs impératifs :
- être compatible chimiquement avec l'électrolyte 1 pour éviter la formation d'une phase indésirable ou la réduction de l'oxyde en bismuth métallique ;
- être compatible chimiquement avec la phase active 3 pour • éviter la formation d'une phase indésirable ou l'empoisonnement de la phase active ;
- assurer l'étanchéité entre l'atmosphère et l'électrolyte 1, y compris après un échauffement du dispositif à 700°C ; en effet, les BIMEVOX sont des céramiques à fort coefficient de dilatation thermique, ce qui entraîne la mise en extension de la plupart des céramiques dont le coefficient de dilatation thermique est plus faible ;
- ne pas être bloquant vis-à-vis des ions oxydes à l'origine de la modification de l'activité catalytique du catalyseur.

Parmi les matériaux susceptibles de répondre aux exigences de l'application, le dioxyde de titane et la zircone yttriée sont les deux composés principalement proposés. Néanmoins, leur faible conductivité ionique à basse température impose une épaisseur la plus faible possible pour la barrière de diffusion 2. En tout état de cause, elle ne doit pas excéder une centaine de nanomètres.

Dans le cas où l'électrolyte 1 est de la famille des cérines dopées, la barrière de diffusion 2 n'est pas nécessaire.

### - L'électrode active 3

L'électrode active 3 est constituée par un film mince de phase active à base de métaux précieux qui peut être déposé par PVD sur la barrière de diffusion 2 ou sur l'électrolyte 1 s'il n'y a pas de barrière de diffusion 2. Les procédés PVD autorisent en effet un contrôle à l'échelle nanométrique de l'épaisseur du matériau déposé. Ainsi, des revêtements de platine d'une épaisseur de 10 à 200nm peuvent être déposés avec une bonne reproductibilité. En outre, du fait de la forte vitesse de refroidissement associée à la condensation d'une vapeur métallique, la microstructure des films déposés est extrêmement fine, ce qui conduit à une activité catalytique importante, tant pour la réduction des oxydes d'azote que pour la combustion des hydrocarbures et de CO. Néanmoins, l'élévation de la température peut entraîner un phénomène de frittage conduisant à une forte coalescence des grains. Celle-ci conduit à une diminution drastique de l'activité catalytique associée à une reconstruction du film pouvant également être néfaste à l'efficacité de la promotion électrochimique. En effet, pour les épaisseurs les plus fines, il est possible que le film ne percole plus ce qui rend impossible sa polarisation. Pour des épaisseurs plus importantes, le regroupement du film sous forme d'îlots diminue fortement le taux de recouvrement de l'électrolyte.

Afin de limiter le frittage du ou des métaux précieux, une solution consiste à réaliser au sein de la couche une fine dispersion d'une phase inerte jouant le rôle d'obstacle au mouvement des joints de grains. Dans ce contexte, le dioxyde de titane, l'alumine, la silice ou tout autre oxyde réfractaire peuvent convenir, avec une taille de particules pouvant être, par exemple, de l'ordre de 5 à 20nm.

Une autre solution consiste à dissocier la double fonction de cette électrode active (catalyseur et électrode) en dispersant le catalyseur sur une phase présentant une conduction électronique ou une conduction mixte. Cette phase peut être un oxyde de structure pérovskite tel que La₁₋ₓ Srₓ MnO₃, ou toute autre pérovskite ou alliage de céramique avec l'électrolyte.

L'introduction de fractions, différentes ou équivalentes, de différents métaux précieux (Pt, Pd, Rh, Ir, Ag...) dans la phase active peut être réalisée.

### - La contre-électrode 4

La contre-électrode 4 est constituée par un film mince de métal ou d'oxyde conducteur électronique déposé sur l'électrolyte 1. La contre-électrode 4 est déposée par PVD sur l'électrolyte 1 sur la face opposée à celle orientée vers la phase active 3. La contre-électrode 4 doit répondre à plusieurs impératifs :
- présenter une bonne conductivité électronique dans les conditions opératoires de fonctionnement du catalyseur électrochimique ;
- être stable chimiquement dans les conditions opératoires de fonctionnement du catalyseur électrochimique ;
- être compatible chimiquement avec l'électrolyte 1 ;
- être catalytiquement inerte, neutre ou active pour les réactions chimiques étudiées. Les matériaux pouvant être utilisés sont, par exemple, l'or et l'acier inoxydable.

A titre d'exemple, l'application d'un courant de 300 µA entre la phase active 3 et la contre-électrode 4 avec une membrane de BITAVOX 1 protégée par une couche mince 2 de YSZ de 46 nm d'épaisseur recouverte par une couche de 40 nm de platine constituant l'électrode active 3 a permis, à 254°C, de doubler les conversions du propène et du monoxyde d'azote. La composition du mélange réactionnel était la suivante : 700ppm C₃H₆/ 1000ppm NO/ 10% O₂.

Un exemple privilégié de catalyseur selon l'invention possède • l'architecture suivante :
- une contre-électrode 4 constituée par une feuille d'alliage FeCr ;
- une couche mince (< 5µm) d'électrolyte solide 1 dense constitué par un oxyde de cérium-gadolinium ;
- une couche mince (20 - 200nm) de manganite de lanthane-strontium La₁₋ₓ Srₓ MnO₃ assurant la polarisabilité de la phase active ;
- une électrode active 3 constituée par une couche nanométrique (< 10nm) de phase active de platine et d'un autre métal précieux tel que la palladium, se regroupant sous la forme d'une fine dispersion de nanoparticules non percolantes lors des premières opérations de chauffage.

Cette configuration simple et fiable formée de couches minces a pour avantage de diminuer considérablement la charge en phase active, donc le coût du catalyseur électrochimique, par rapport aux catalyseurs connus.

Parmi les différentes applications de l'invention, peuvent être citées : la réduction des émissions polluantes d'oxydes d'azote NO, NO₂ et/ou d'hydrocarbures et/ou de CO provenant des échappements des moteurs essence fonctionnant à la stoechiométrie ou en régime pauvre et des moteurs Diesel, ainsi que le diagnostic embarqué du catalyseur.

### a) Réduction des émissions polluantes - Application aux moteurs à essence fonctionnant à la stoechiométrie

Il a été démontré que la promotion électrochimique est capable de promouvoir l'activité d'un catalyseur métallique (à base de métaux précieux) pour le traitement des NOx, des HC et de CO en vue d'une application essence à la stoechiométrie. Cependant, deux verrous technologiques freinaient le développement de la promotion électrochimique :
1. La température de fonction: les publications rapportent des résultats obtenus à des températures supérieures à 300°C, rendant le procédé inactif au démarrage.
   L'invention résout ce problème du fait qu'elle utilise de nouveaux catalyseurs électrochimiques comportant un électrolyte beaucoup plus conducteur que YSZ, en l'occurrence notamment les BIMEVOX et les cérines dopées.
2. La microstructure du film de catalyseur : la surface accessible au gaz pour une même teneur en métaux précieux est moins importante que dans le cas d'un washcoat déposé sur un monolithe.

L'invention résout ce problème en utilisant des films ultra minces (quelques nm) qui permettent d'utiliser la quasi-totalité des métaux précieux et d'obtenir, à taux de métaux précieux égal, une surface accessible aussi grande qu'un monolithe en augmentant la surface géométrique. Cette utilisation est rendue possible grâce aux procédés de dépôt en phase physique vapeur (PVD).

### b) Réduction des émissions polluantes - Application pauvre (essence et Diesel)

Il n'existe pas, à l'heure actuelle, de système embarqué efficace pour la réduction des NOₓ en présence d'un large excès d'oxygène. Là encore, on savait que la promotion électrochimique était capable de promouvoir l'activité d'un catalyseur métallique (à base de métaux précieux) pour le traitement des NOx, des HC et de CO en vue d'une application fonctionnant avec un large excès d'oxygène par rapport au carburant (moteurs Diesel, futurs moteurs à essence « pauvres », futurs moteurs à combustion de type LTC, ...). Mais il était nécessaire de trouver un moyen d'abaisser la température à partir de laquelle le catalyseur devient actif.

Le dispositif selon l'invention permet d'ajuster les propriétés catalytiques du catalyseur par voie électrochimique de manière à autoriser une activité dès 100°C pour la réduction des NOx et la combustion des hydrocarbures et de CO en présence d'un large excès d'oxygène.

### c) Diagnostic embarqué

Actuellement, seules les réglementations Essence exigent un diagnostic embarqué (on-board diagnostic OBD) comprenant la vérification de l'état du piège et des capteurs associés. Les normes futures pourraient imposer de tels diagnostics pour les applications Diesel.

Dans le contexte actuel, il y a un enjeu majeur à développer des systèmes catalytiques performants, pour répondre aux réglementations, et durables, pour limiter l'impact du coût sur les véhicules. Il est donc souhaitable de pouvoir procéder à un diagnostic en cours d'utilisation pour permettre, dans la mesure du possible, de moduler les paramètres moteurs au regard du comportement du catalyseur à un instant donné.

La spécificité du catalyseur électrochimique est qu'il permet de convertir les polluants de façon plus efficace quand il est soumis à une tension donnée. Mais celui-ci peut également s'auto-diagnostiquer pour évaluer son état de vieillissement (dégradation thermique et empoisonnement au soufre). Cette capacité d'auto-diagnostic est liée à son fonctionnement propre: une tension appliquée aux électrodes permet d'augmenter le flux d'ions (O₂⁻) provenant de la membrane de BIMEVOX ou de cérine dopée jusqu'à la surface de l'électrode active. En l'absence de polarisation, un potentiel à l'abandon s'établit entre l'électrode active et la contre-électrode (équilibre O₂ (gaz) / O²⁻ (électrolyte)). Dans le cas où la contre-électrode est catalytiquement inactive, les variations de potentiel à l'abandon sont directement liées à l'activité thermodynamique de l'oxygène à la surface de l'électrode active selon la loi de Nernst. Il a été montré dans la littérature que l'activité thermodynamique de l'oxygène est reliée à l'activité catalytique de la phase active pour des réactions de combustion des hydrocarbures légers, d'oxydation totale du CO et de réduction sélective des NOₓ par les hydrocarbures. Par conséquent, la mesure du potentiel entre l'électrode active et la contre-électrode peut, par comparaison avec une valeur de référence, être utilisée pour le diagnostic embarqué du catalyseur. Cette fonctionnalité peut également servir à faire évoluer les stratégies de gestion du catalyseur en fonction de sa dégradation pour une conversion optimale à tout instant du fonctionnement du moteur.

Pour la présente invention et les applications visées, le support de diagnostic ne peut être utilisé qu'en séquentiel avec la promotion électrochimique du catalyseur puisque le même élément est en jeu lors des deux opérations. Ainsi, les options offertes sont :
- mesure du potentiel pour déterminer si le catalyseur est actif ou inactif ;
- s'il est actif, en fonction de son efficacité on peut décider de mettre en route la promotion électrochimique, de jouer sur le contrôle moteur ou encore de ne rien faire et de vérifier avec la mesure du potentiel que son fonctionnement reste optimal ;
- s'il est inactif, on peut décider d'activer la promotion électrochimique ou de faire du contrôle moteur et vice versa en repassant par la fonctionnalité diagnostic pour une meilleure optimisation.

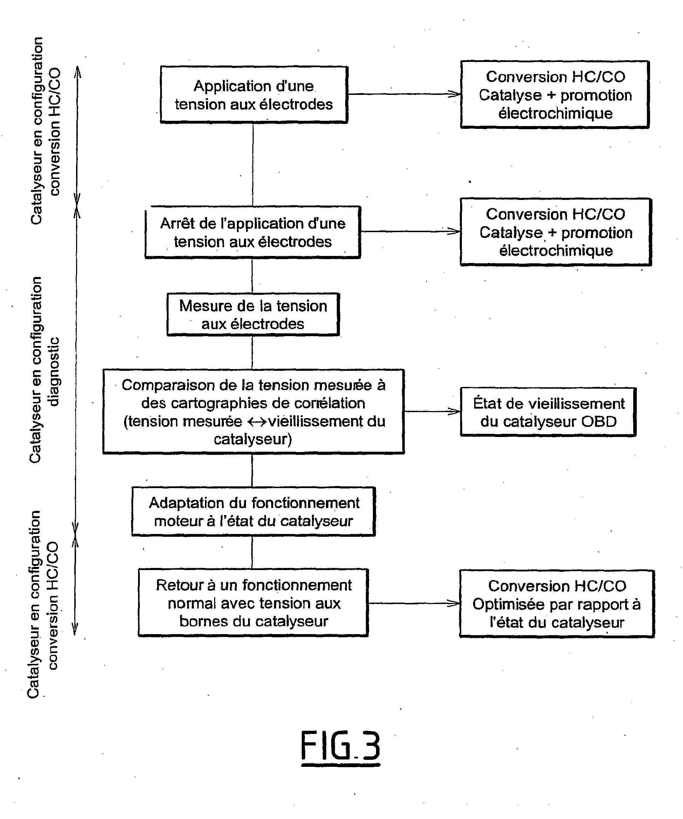

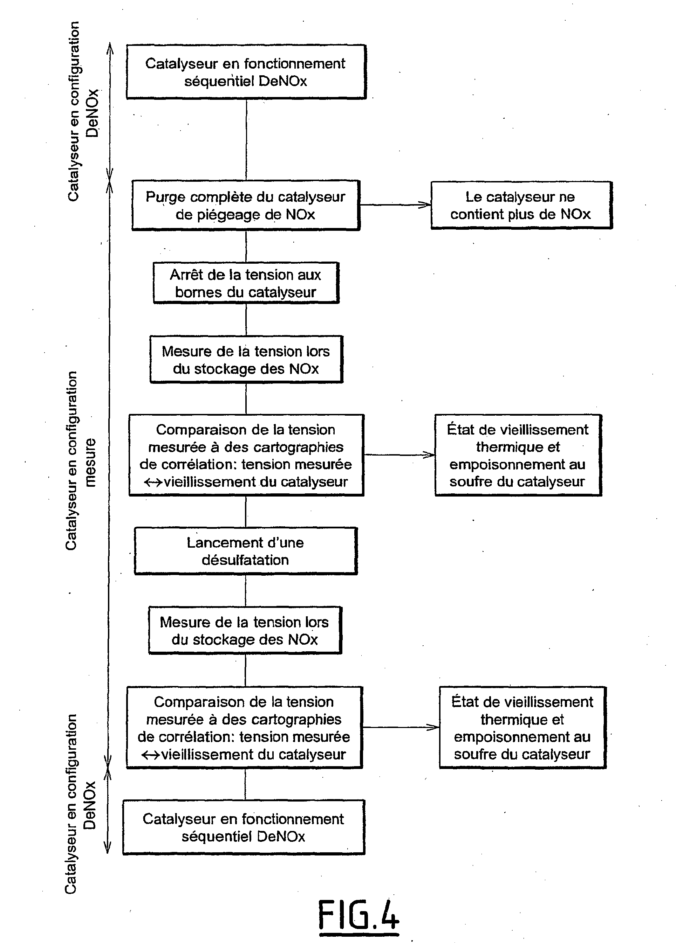

A titre d'exemple, les figures 3 et 4 présentent des stratégies d'utilisation potentielles du catalyseur électrochimique :

### * Diagnostic de l'état d'un catalyseur électrochimique de conversion des HC/CO pour l'OBD et pour l'adaptation des stratégies pour une conversion optimale :

Dans les périodes de fonctionnement normal du catalyseur en configuration « conversion HC/CO », la tension ou le courant appliqué aux électrodes par le générateur 5 (gamme maximale ± 2 V ou ± 100 mA, classiquement ± 1 V ou ± 1 mA) fait que la conversion des HC/CO s'effectue par catalyse et promotion électrochimique dans les conditions nominales. Lorsqu'un diagnostic de l'état du catalyseur pour la fonction « conversion des HC/CO » doit être effectué, le dispositif de contrôle moteur 7 commande l'arrêt de l'application de la tension ou du courant par le générateur 5. Dans ces conditions, la tension à l'abandon subsistant aux électrodes n'est plus due qu'à l'activité thermodynamique de l'oxygène à la surface de l'électrode active, et est donc caractéristique du taux de recouvrement en oxygène du catalyseur, et par conséquent de son activité. Cette tension est mesurée (ordre de grandeur habituel : ±1 V), et comparée à des cartographies de corrélation de cette tension au vieillissement du catalyseur, intégrées au dispositif de contrôle moteur 7. Celui-ci en déduit l'état de vieillissement dans lequel se trouve le catalyseur, et adapte la gestion du fonctionnement du moteur à cet état.

Par exemple, si on constate une baisse significative du potentiel suite à un empoisonnement par le combustible (HC, CO), on applique une polarisation négative pour augmenter le taux de recouvrement en oxygène, et donc l'activité.

Si on constate une hausse significative du potentiel suite à un empoisonnement par l'oxygène, on applique une tension positive.

Après quoi, la tension (ou le courant) est ajusté(e) en fonction du diagnostic sur l'état de vieillissement et réappliquée aux bornes du catalyseur, de manière à obtenir une conversion des HC/CO dans des conditions optimisées.

Lorsque le vieillissement est considéré par le dispositif de contrôle moteur 7 comme trop important pour que le moteur puisse fonctionner dans de bonnes conditions, le dispositif de contrôle moteur 7 déclenche une opération de régénération du catalyseur.

### * Mesure intrusive de l'état d'un catalyseur électrochimique de stockage/conversion des NOx pour la décision d'une désulfàtation et pour l'évaluation de la dégradation thermique du catalyseur :

Dans les points de fonctionnement normal du catalyseur en configuration « piège à NOx », la tension (ou le courant) déterminée appliquée aux électrodes 3, 4 par le générateur 5 fait que ce piégeage des NOx s'effectue dans les conditions nominales. Lorsqu'une opération de mesure de l'état du vieillissement du catalyseur est décidée par le dispositif de contrôle moteur 7, celui-ci lance une opération de purge complète du catalyseur pour en éliminer les NOx qu'il renferme. Ensuite, l'application de la tension aux électrodes 3, 4 est interrompue, et le stockage des NOx ne s'effectue plus que de façon « naturelle », sans l'assistance de la promotion électrochimique. La tension à l'abandon qui s'établit alors entre les électrodes 3, 4 est mesurée et comparée à des cartographies de corrélation entre cette tension et le vieillissement du catalyseur. Celui-ci peut être dû aussi bien à un vieillissement thermique qu'à un empoisonnement au soufre. Si ce vieillissement est jugé trop important par le dispositif de contrôle moteur 7, celui-ci lance alors l'exécution d'une désulfatation du catalyseur. Après quoi, la tension aux électrodes 3, 4 est à nouveau mesurée et comparée aux cartographies de corrélation de manière à apprécier l'effet de la désulfatation. Enfin, une tension (ou un courant) déterminée est à nouveau appliquée aux électrodes 3, 4 par le générateur 5 et le catalyseur retrouve son mode de fonctionnement avec promotion électrochimique. Si l'opération de désulfatation n'a pas permis de restaurer un fonctionnement du catalyseur identique à ce qu'il était lors de la précédente mesure du vieillissement, le dispositif de contrôle moteur 7 le signale à l'utilisateur et gère les paramètres de fonctionnement du moteur en conséquence.

## Revendications

1. Catalyseur pour ligne d'échappement de moteur à combustion interne, **caractérisé en ce qu'**il est constitué par l'empilement dans cet ordre :
- d'une phase active à base de métaux précieux (3) formant électrode déposée par dépôt physique en phase vapeur PVD;
- d'un électrolyte (1) présentant une conductivité ionique par les ions O²⁻ supérieure ou égale à 0,01 mS/cm à 200°C ;
- d'une contre-électrode (4)
et **en ce que** les propriétés catalytiques de ladite phase active (3) sont activables à 100°C sous l'effet d'une puissance électrique de 0,1µW/cm² de phase active (3).

2. Catalyseur selon la revendication 1, **caractérisé en ce qu'**il comporte une barrière de diffusion (2) entre la phase active (3) et l'électrolyte (1).

3. Catalyseur selon l'une des revendications 1 ou 2, **caractérisé en ce que** la contre-électrode (4) est constituée par un support métallique intégré à un boîtier (10) renfermant le catalyseur.

4. Catalyseur selon l'une des revendications 1 à 3, **caractérisé en ce que** l'électrolyte (1) est constitué de BIMEVOX.

5. Catalyseur selon la revendication 4, **caractérisé en ce que** le métal du BIMEVOX est choisi parmi le tantale, le titane, le cobalt, le cuivre, le nickel, le zinc, ou tout autre métal de transition, un métal alcalin, un métal alcalino-terreux, une terre rare, un métal des groupes IIIₐ, IVₐ ou Vₐ de la classification périodique, et un mélange de ces métaux.

6. Catalyseur selon l'une des revendications 1 à 3, **caractérisé en ce que** l'électrolyte (1) est une cérine dopée par un ou des oxydes de terres rares telles que le gadolinium ou le samarium.

7. Catalyseur selon l'une des revendications 2 à 6, **caractérisé en ce que** la barrière de diffusion (2) est en dioxyde de titane ou en zircone yttriée, a une épaisseur de 100nm ou moins et a été déposée sur l'électrode (1) par dépôt physique en phase vapeur.

8. Catalyseur selon l'une des revendications 1 à 7, **caractérisé en ce que** la phase active (3) formant électrode est un revêtement de platine et/ou de palladium et/ou de rhodium, déposé par dépôt physique en phase vapeur.

9. Catalyseur selon l'une des revendications 1 à 8, **caractérisé en ce que** la phase active à base de métaux précieux (3) incorpore une dispersion d'une phase inerte capable de limiter le frittage de la phase active (3).

10. Catalyseur selon l'une des revendications 1 à 7, **caractérisé en ce que** la phase active à base de métaux précieux (3) incorpore une dispersion des métaux précieux sur une phase conductrice électronique.

11. Catalyseur selon la revendication 10, **caractérisé en ce que** ladite phase conductrice électronique est un oxyde de structure pérovskite tel que La(₁₋ₓ) Srₓ MnO₃.

12. Catalyseur selon la revendication 10, **caractérisé en ce que** ladite phase conductrice électronique est un alliage d'une céramique avec l'électrolyte.

13. Catalyseur selon l'une des revendications 1 à 12, **caractérisé en ce que** la contre-électrode (4) est une couche mince de métal ou d'oxyde conducteur électronique déposée sur l'électrolyte (1) par dépôt physique en phase vapeur.

14. Dispositif de réduction des émissions polluantes d'un moteur à combustion interne (6), **caractérisé en ce qu'**il comporte :
- un catalyseur selon l'une des revendications 1 à 13 ;
- un générateur de courant connecté à la phase active (3) et à la contre-électrode (4), inclus dans une ligne (11) d'alimentation du catalyseur en électricité ;
- un dispositif électronique de contrôle moteur (7) réglant et recueillant les paramètres de fonctionnement du moteur et commandant la ligne (11) d'alimentation du catalyseur en électricité de manière à pouvoir imposer une tension ou un courant déterminé entre la phase active (3) et la contre-électrode (4) ;
- un boîtier (10) renfermant le catalyseur, placé sur la ligne d'échappement du moteur (6).

15. Utilisation d'un dispositif selon la revendication 14 pour la conversion des hydrocarbures, du CO et des NOx émis par un moteur à combustion interne (6), **caractérisée en ce que** :
- lors des périodes de fonctionnement normal du catalyseur, on applique une tension ou un courant déterminé entre la phase active (3) formant électrode et la contre-électrode (4) ;
- lorsqu'on désire effectuer un diagnostic de l'état du catalyseur, on arrête l'application de la tension ou du courant, on mesure la tension à l'abandon entre l'électrode active (3) et la contre-électrode (4), on compare cette tension à des cartographies de corrélation de cette tension au vieillissement du catalyseur intégrées au dispositif de contrôle moteur (7), on en déduit l'état de vieillissement du catalyseur, le cas échéant on procède à une modification des paramètres de fonctionnement du moteur (6), et on réapplique une tension ou un courant déterminé entre la phase active (3) et la contre-électrode (4).

16. Utilisation d'un dispositif selon la revendication 14 pour le piégeage des NOx, **caractérisée en ce que** :
- lors des périodes de fonctionnement normal du catalyseur, on applique une tension ou un courant déterminé entre la phase active (3) formant électrode et la contre-électrode (4) ;
- lorsqu'on désire effectuer un diagnostic de l'état du catalyseur, on lance une opération de purge du catalyseur pour en éliminer les NOx qu'il renferme, on arrête l'application de la tension ou du courant, on mesure la tension à l'abandon entre l'électrode active (3) et la contre-électrode (4), on compare cette tension à des cartographies de corrélation de cette tension au vieillissement du catalyseur intégrées au dispositif de contrôle moteur (7), on en déduit l'état de vieillissement du catalyseur, et le cas échéant on lance l'exécution d'une désulfatation du catalyseur suivie d'une nouvelle mesure de la tension résultant du courant d'ions dans l'électrolyte (1) et d'une comparaison de cette tension aux cartographies de corrélation au vieillissement du catalyseur, puis on rétablit l'application d'une tension ou d'un courant déterminé entre la phase active (3) formant électrode et la contre-électrode (3), en procédant à une modification des paramètres de fonctionnement du moteur (6) si on a constaté que la désulfatation n'a pas permis de restaurer un fonctionnement du catalyseur identique à ce qu'il était lors de la précédente mesure du vieillissement.

## Patentansprüche

1. Katalysator für Verbrennungsmotor-Abgasleitung, **dadurch gekennzeichnet, dass** er aus einer Stapelung in der folgenden Reihenfolge besteht:
- eine aktive Phase auf der Grundlage von Edelmetallen (3), die eine Elektrode bilden, die durch physikalische Ablagerung in der Phase PVD aufgebracht wird,
- einen Elektrolyt (1), der eine ionische Leitfähigkeit durch O² -Ionen größer oder gleich 0,01 mS/cm bei 200 °C aufweist,
- eine Gegenelektrode (4)
und dadurch, dass die katalytischen Eigenschaften der aktiven Phase (3) bei 100 °C unter der Einwirkung einer elektrischen Leistung von 0,1 µW/cm² aktive Phase (3) aktivierbar sind.

2. Katalysator nach Anspruch 1, **dadurch gekennzeichnet, dass** er eine Verteilungsbarriere (2) zwischen der aktiven Phase (3) und dem Elektrolyt (1) umfasst.

3. Katalysator nach einem der Ansprüche 1 oder 2, **dadurch gekennzeichnet, dass** die Gegenelektrode (4) aus einem metallischen Träger besteht, der in ein Gehäuse (10), das den Katalysator einschließt, integriert ist.

4. Katalysator nach einem der Ansprüche 1 bis 3, **dadurch gekennzeichnet, dass** der Elektrolyt (1) aus BIMEVOX besteht.

5. Katalysator nach Anspruch 4, **dadurch gekennzeichnet, dass** das Metall des BIMEVOX aus Tantal, Titan, Kobalt, Kupfer, Nickel, Zink oder jedem anderen Übergangsmaterial, einem alkalischen Metall, einem Erdalkalimetall, einer seltenen Erde, einem Metall der Gruppen IIIₐ, IVₐ oder Vₐ des Periodensystems und einem Gemisch dieser Metalle ausgewählt ist.

6. Katalysator nach einem der Ansprüche 1 bis 3, **dadurch gekennzeichnet, dass** der Elektrolyt (1) ein Cerin ist, das mit einem oder mehreren Seltenerdoxiden, wie zum Beispiel Gadolinium oder Samarium dotiert ist.

7. Katalysator nach einem der Ansprüche 2 bis 6, **dadurch gekennzeichnet, dass** die Diffusionsbarriere (2) ein Titandioxid oder yttriertes Zirkonium ist, eine Stärke von 100 nm oder weniger hat und auf der Elektrode (1) durch physikalische Ablagerung in Dampfphase aufgebracht wurde.

8. Katalysator nach einem der Ansprüche 1 bis 7, **dadurch gekennzeichnet, dass** die aktive Phase (3), die die Elektrode bildet, eine Beschichtung aus Platin und/oder Palladium und/oder Rhodium ist, die durch physikalische Ablagerung im Dampfphase aufgebracht wird.

9. Katalysator nach einem der Ansprüche 1 bis 8, **dadurch gekennzeichnet, dass** die aktive Phase auf der Basis von Edelmetallen (3) eine Dispersion einer inerten Phase enthält, die fähig ist, das Sintern der aktiven Phase (3) einzuschränken.

10. Katalysator nach einem der Ansprüche 1 bis 7, **dadurch gekennzeichnet, dass** die aktive Phase auf der Basis von Edelmetallen (3) eine Dispersion der Edelmetalle auf einer elektronisch leitenden Phase enthält.

11. Katalysator nach Anspruch 10, **dadurch gekennzeichnet, dass** die elektronisch leitende Phase ein Oxid mit Perowskit-Strukture ist, wie zum Beispiel La₍₁₋ₓ₎SrₓMnO₃.

12. Katalysator nach Anspruch 10, **dadurch gekennzeichnet, dass** die elektronisch leitende Phase eine Legierung aus einer Keramik mit dem Elektrolyt ist.

13. Katalysator nach einem der Ansprüche 1 bis 12, **dadurch gekennzeichnet, dass** die Gegenelektrode (4) eine dünne Schicht aus Metall oder elektronisch leitendem Oxid ist, die auf dem Elektrolyt (1) durch physikalische Ablagerung in Dampfphase aufgebracht ist.

14. Vorrichtung zur Verringerung von Schadstoffemissionen eines Verbrennungsmotors (6), **dadurch gekennzeichnet, dass** sie Folgendes umfasst:
- einen Katalysator nach einem der Ansprüche 1 bis 13,
- einen Stromgenerator, der mit der aktiven Phase (3) und der Gegenelektrode (4), die in einer Stromversorgungsleitung (11) des Katalysators enthalten sind, verbunden ist,
- eine elektronische Motorsteuervorrichtung (7), die die Betriebsparameter des Motors regelt und empfängt und die Stromversorgungsleitung (11) des Katalysators derart steuert, dass eine bestimmte Spannung oder ein bestimmter Strom zwischen der aktiven Phase (3) und der Gegenelektrode (4) auferlegt werden kann,
- ein Gehäuse (10), das den Katalysator einschließt, das auf dem Auspuffstrang des Motors (6) platziert ist.

15. Verwendung einer Vorrichtung nach Anspruch 14 für die Umwandlung der Kohlenwasserstoffe, des CO und der NOx, die von einem Verbrennungsmotor (6) abgegeben werden, **dadurch gekennzeichnet, dass**
- man bei normalen Betriebsperioden des Katalysators eine bestimmte Spannung oder einen bestimmten Strom zwischen der aktiven Phase (3), die die Elektrode bildet, und der Gegenelektrode (4) anlegt,
- wenn man wünscht, eine Diagnose des Zustands des Katalysators auszuführen, man das Anlegen der Spannung oder des Stroms stoppt, die Spannung beim Aufgeben zwischen der aktiven Elektrode (3) und der Gegenelektrode (4) misst, diese Spannung mit Korrelationskartographien dieser Spannung beim Altern des Katalysators, die in die Motorsteuervorrichtung (7) integriert sind, vergleicht, man daraus den Alterungszustand des Katalysators ableitet, gegebenenfalls eine Änderung der Betriebsparameter des Motors (6) vornimmt und eine bestimmte Spannung oder einen bestimmten Strom wieder zwischen der aktiven Phase (3) und der Gegenelektrode (4) anlegt.

16. Verwendung einer Vorrichtung nach Anspruch 14 zum Fangen der NOx, **dadurch gekennzeichnet, dass**:
- man bei normalen Betriebsperioden des Katalysators eine bestimmte Spannung oder einen bestimmten Strom zwischen der aktiven Phase (3), die die Elektrode bildet, und der Gegenelektrode (4) anlegt,
- wenn man wünscht, eine Diagnose des Zustands des Katalysators durchzuführen, man einen Entleerungsvorgang des Katalysators startet, um aus ihm die NOx, die er enthält, zu entfernen, man das Anlegen der Spannung oder des Stroms stoppt, man die Spannung beim Aufgeben zwischen der aktiven Elektrode (3) und der Gegenelektrode (4) misst, man diese Spannung mit Korrelationskartographien dieser Spannung beim Altern des Katalysators, die in die Motorsteuervorrichtung (7) integriert sind, vergleicht, man daraus den Alterungszustand des Katalysators ableitet, und man gegebenenfalls die Ausführung einer Desulfatisierung des Katalysators gefolgt von einer neuen Messung der Spannung startet, die aus dem Ionenstrom in dem Elektrolyt (1) resultiert, und einen Vergleich dieser Spannung mit den Korrelationskartographien beim Altern des Katalysators, man dann das Anlegen einer bestimmten Spannung oder eines bestimmten Stroms zwischen der aktiven Phase (3), die die Elektrode bildet, und der Gegenelektrode (3) wieder herstellt, indem man eine Änderung der Betriebsparameter des Motors (6) vornimmt, falls man festgestellt hat, dass die Desulfatisierung es nicht erlaubt hat, ein Funktionieren des Katalysators identisch mit dem, was es bei der vorhergehenden Messung der Alterung war, wieder herzustellen.

## Claims

1. A catalyst for an internal combustion engine exhaust line, **characterized in that** is it constituted by the stack, in this order:
- of an active phase (3) based on precious metals, forming an electrode deposited by physical vapour deposition PVD;
- of an electrolyte (1) having an ionic conductivity through O² ions greater than or equal to 0.01 mS/cm at 200°C;
- of a counter electrode (4)
and **in that** the catalytic properties of the said active phase (3) are activatable at 100°C under the effect of an electric power of 0.1µW/cm² of active phase (3).

2. The catalyst according to claim 1, **characterized in that** it comprises a diffusion barrier (2) between the active phase (3) and the electrolyte (1).

3. The catalyst according to one of claims 1 or 2, **characterized in that** the counter electrode (4) is constituted by a metallic support integrated to a case (10) containing the catalyst.

4. The catalyst according to one of claims 1 to 3, **characterized in that** the electrolyte (1) is constituted by BIMEVOX.

5. The catalyst according to claim 4, **characterized in that** the metal of the BIMEVOX is selected from tantalum, titanium, cobalt, copper, nickel, zinc, or any other transition metal, an alkaline metal, and alkaline earth metal, a rare earth, a metal of the groups IIIₐ, IVₐ or Vₐ of the periodic table, and a mixture of these metals.

6. The catalyst according to one of claims 1 to 3, **characterized in that** the electrolyte (1) is a cerine doped by one or more oxides of rare earths such as gadolinium or samarium.

7. The catalyst according to one of claims 2 to 6, **characterized in that** the diffusion barrier (2) is of titanium dioxide or of yttriated zirconia, has a thickness of 100nm or less and has been deposited on the electrode (1) by physical vapour deposition.

8. The catalyst according to one of claims 1 to 7, **characterized in that** the active phase (3) forming the electrode is a coating of platinum and/or of palladium and/or of rhodium, deposited by physical vapour deposition.

9. The catalyst according to one of claims 1 to 8, **characterized in that** the active phase based on precious metals (3) incorporates a dispersion of an inert phase capable of limiting the sintering of the active phase (3).

10. The catalyst according to one of claims 1 to 7, **characterized in that** the active phase based on precious metals (3) incorporates a dispersion of the precious metals on an electronic conductive phase.

11. The catalyst according to claim 10, **characterized in that** the said electronic conductive phase is an oxide of perovskite structure such as La₍₁₋ₓ₎SrₓMNO₃.

12. The catalyst according to claim 10, **characterized in that** the said electronic conductive phase is an alloy of a ceramic with the electrolyte.

13. The catalyst according to one of claims 1 to 12, **characterized in that** the counter electrode (4) is a thin layer of metal or of electronic conductive oxide deposited on the electrolyte (1) by physical vapour deposition.

14. A device for reducing polluting emissions from an internal combustion engine (6), **characterized in that** it comprises:
- a catalyst according to one of claims 1 to 13;
- a current generator connected to the active phase (3) and to the counter electrode (4), included in a line (11) for supply of the catalyst with electricity;
- an electronic engine control device (7), regulating and collecting the parameters of the functioning of the engine and controlling the line (11) for supply of the catalyst with electricity so as to be able to impose a voltage or a specific current between the active phase (3) and the counter electrode (4);
- a case (10) containing the catalyst, placed on the exhaust line of the engine (6).

15. The use of a device according to claim 14 for the conversion of hydrocarbons, of the CO and of the NOx emitted by an internal combustion engine (6), **characterized in that**:
- during periods of normal functioning of the catalyst, a voltage or a specific current is applied between the active phase (3) forming the electrode and the counter electrode (4);
- when one wishes to carry out a diagnosis of the status of the catalyst, the application of the voltage or of the current is stopped, the abandoned voltage is measured between the active electrode (3) and the counter electrode (4), this voltage is compared with correlation mappings of this voltage to the ageing of the catalyst integrated in the engine control device (7), and the ageing status of the catalyst is deduced therefrom, if applicable a modification is carried out of the functioning parameters of the engine (6), and a voltage or a specific current is reapplied between the active phase (3) and the counter electrode (4).

16. The use of a device according to claim 14 for the trapping of the NOx, **characterized in that**:
- during periods of normal functioning of the catalyst, a voltage or a specific current is applied between the active phase (3) forming the electrode and the counter electrode (4);
- when one wishes to carry out a diagnosis of the status of the catalyst, a purging operation of the catalyst is initiated to eliminate therefrom the NOx which it contains, the application of the voltage or of the current is stopped, the abandoned voltage is measured between the active electrode (3) and the counter electrode (4), this voltage is compared to correlation cartographies of this voltage to the ageing of the catalyst integrated in the engine control device (7), the ageing status of the catalyst is deduced therefrom, and if applicable the execution of a desulphation of the catalyst is initiated, followed by a new measurement of the voltage resulting from the current of ions in the electrolyte (1) and a comparison of this voltage to the correlation cartographies to the ageing of the catalyst, then the application of a voltage or of a specific current is re-established between the active phase (3) forming the electrode and the counter electrode (3), proceeding to a modification of modification of the parameters of functioning of the engine (6) if it has been found that the desulphation has not permitted a restoring of a functioning of the catalyst identical to that which it was during the preceding measurement of ageing.
